# EUROPÄISCHE PATENTSCHRIFT

(11) **EP 3 408 133 B1**
(45) Veröffentlichungstag und Bekanntmachung des Hinweises auf die Patenterteilung: **14.10.2020**
(21) Anmeldenummer: 17700174.0
(22) Anmeldetag: 09.01.2017
(51) Int. Cl.: B60N 2/75

(54) **ARMLEHNENANORDNUNG FÜR EINEN KRAFTFAHRZEUGSITZ**
ARMREST ARRANGEMENT FOR AN AUTOMOTIVE VEHICLE SEAT
ASSEMBLAGE D'ACCOUDOIR POUR SIÈGE DE VÉHICULE AUTOMOBILE

(30) Priorität: 29.01.2016 DE 102016000904; 19.10.2016 DE 102016220501
(43) Veröffentlichungstag der Anmeldung: 05.12.2018
(73) Patentinhaber: BOS GmbH & Co. KG, 73760 Ostfildern (DE)
(72) Erfinder: TUTELEA, Bogdan, 42799 Leichlingen (DE); SITZLER, Wolfgang, 42111 Wuppertal (DE); PINK, Tanja, 42285 Wuppertal (DE); GÖBBELS, Andreas, 51515 Kürten (DE); BOHLKE, Hartmut, 42369 Wuppertal (DE); BODDENBERG, Jan, 50674 Köln (DE)
(74) Vertreter: Patentanwälte Ruff, Wilhelm, Beier, Dauster & Partner mbB
(86) Internationale Anmeldenummer: PCT/EP2017/050334
(87) Internationale Veröffentlichungsnummer: WO 2017/129388

(56) Entgegenhaltungen:
- FR-A1- 2 734 769
- JP-U- S6 152 955
- US-A- 5 778 733
- US-A1- 2008 296 954

## Beschreibung

Die Erfindung betrifft eine Armlehnenanordnung für einen Kraftfahrzeugsitz mit einer ortsfesten Trägerstruktur und mit einem Armlehnenkörper, der relativ zu der Trägerstruktur um eine Schwenkachse schwenkbeweglich gelagert ist, und dem eine Neigungsverstelleinheit zugeordnet ist, die in einer Funktionsposition des Armlehnenkörpers eine Veränderung einer Neigung des Armlehnenkörpers relativ zur ortsfesten Trägerstruktur ermöglicht, wobei die Neigungsverstelleinrichtung ein manuell bedienbares Betätigungsglied und eine Blockiereinrichtung zur Sicherung einer mittels des Betätigungsgliedes vorgenommenen Neigungseinstellung aufweist, wobei der Armlehnenkörper ein Stützglied aufweist, das quer zu der Schwenkachse an dem Armlehnenkörper linearbeweglich verstellbar und stirnseitig an der ortsfesten Trägerstruktur abgestützt ist, und dass das Betätigungsglied und die Blockiereinrichtung derart mit dem linearbeweglichen Stützglied in Wirkverbindung sind, dass das Stützglied durch das Betätigungsglied für eine Linearverstellung freigebbar und durch die Blockiereinrichtung in einer eingestellten Stützposition arretierbar ist.

Eine derartige Armauflagevorrichtung ist aus den Patentanmeldungen FR 2 734 769 A1, US 2008/296954 A1 sowie dem Gebrauchsmuster JP S61 52955 U bekannt. Eine aus der Offenlegungsschrift DE 10 2014 210 134 A1 bekannte Armauflagevorrichtung weist ein Armauflageteil auf, das zwischen einer Armauflagestellung und einer Nichtgebrauchsstellung um eine Schwenkachse verschwenkbar ist. Die Schwenkachse ist in einen relativ zu einem Basisteil stationär angeordneten Basisachsabschnitt und in einen drehfest mit dem Armauflageteil verbundenen Auflageachsabschnitt unterteilt. Eine Blockiereinrichtung in Form einer Schlingbremse verbindet beide Achsabschnitte in einem blockierten Zustand der Schlingfeder. Wird die Blockiereinrichtung gelöst, so wird ein Verschwenken des Auflageachsabschnitts gegenüber dem Basisachsabschnitt ermöglicht. Somit kann das Armauflageteil gegenüber dem Basisteil verschwenkt werden und in einer gewünschten Schwenkposition mit einem Blockieren der Schlingbremse festgelegt werden. Hierdurch ist eine Verstellung einer Neigung des Armauflageteils möglich. Zusätzlich ist eine Verschwenkung zwischen der Armauflagestellung und der Nichtgebrauchsstellung bei blockierter Schlingbremse möglich. Eine weitere, für eine Armlehne verwendbare Blockiereinrichtung, ist aus der US Patentschrift US 5 778 733 A bekannt.

Aufgabe der Erfindung ist es, eine Armlehnenanordnung der eingangs genannten Art zu schaffen, die eine einfache Neigungseinstellung ermöglicht.

Diese Aufgabe wird dadurch gelöst, dass das Stützglied durch eine mit dem Armlehnenkörper feste Führung in Verstellrichtung formschlüssig gehalten ist, und dass das Stützglied mittels eines Bewegungsgewindes in der mit dem Armlehnenkörper festen Führung gehalten ist. Somit ist eine stufenlose Neigungseinstellung des Armlehnenkörpers relativ zu der Trägerstruktur möglich. Die Neigungsverstelleinrichtung ist in dem Armlehnenkörper integriert, so dass der Bereich der Schwenkachse platzsparend gestaltet sein kann.

Das Stützglied kann dazu ein Gewinde oder eine Verzahnung aufweisen. Der Armlehnenkörper kann ein komplementäres Gewinde oder eine komplementäre Verzahnung aufweisen, die mit dem Gewinde oder der Verzahnung des Stützglieds in Eingriff gebracht werden kann, um diese zu blockieren. Das Stützglied kann beispielsweise eine Zahnstange oder eine Gewindespindel sein. Am Armlehnenkörper kann ein rotierendes Zahnrad oder eine feststehende Spindelmutter angeordnet sein. Auch ein Eingreifen eines drehfest angeordneten verzahnten Elementes in die Zahnstange kann zum Blockieren des Stützglieds vorgesehen sein. Ein Längenabschnitt des Stützglieds zwischen einer ortsfesten Abstützungsstelle des Stützglieds an der Trägerstruktur und der Führung definiert dabei die Neigungseinstellung des Armlehnenkörpers. Ist der Längenabschnitt relativ kurz eingestellt, so nimmt der Armlehnenkörper eine Position mit einem relativ geringen Winkel zwischen Armlehnenkörper und Sitzfläche ein. Ist der Längenabschnitt des Stützglieds zwischen einer Abstützstelle der Trägerstruktur und der Führung relativ lang eingestellt, so befindet sich der Armlehnenkörper in einer Position mit einem relativ großen Winkel zwischen der Sitzfläche und dem Armlehnenkörper.

Das Bewegungsgewinde weist keine Selbsthemmung auf, so dass eine Verlagerung des Stützglieds bei der Verstellbewegung des Armlehnenkörpers möglich ist. Bei einer Linearverlagerung bzw. einer Krafteinleitung in den Armlehnenkörper kann so bei freigegebenem Blockierelement das Stützglied in Rotation versetzt werden.

In Ausgestaltung der Erfindung ist das Betätigungsglied mittels einer Fernübertragungseinrichtung mit der Blockiereinrichtung gekoppelt. Die Fernübertragung kann mechanisch, elektrisch, pneumatisch oder hydraulisch sein. Vorteilhaft ist das Betätigungsglied in einem Bereich angeordnet, in dem ein Benutzer es bequem ergreifen und bedienen kann, vorteilhaft an einer Unterseite des Armlehnenkörpers in einem einem Verbindungsbereich des Armlehnenkörpers und einer Rückenlehne abgewandten Bereich. Dieser Bereich entspricht vorzugsweise einer Position einer Hand einer Bedienperson, wenn der Arm der Bedienperson auf dem Armlehnenkörper aufliegt. Das Betätigungsglied ist demzufolge ergonomisch günstig positioniert. Die Fernübertragungseinrichtung stellt vorteilhaft die Verbindung zwischen dem Betätigungsglied und der Blockiereinrichtung her, wobei die Blockiereinrichtung somit nicht in einem Bereich angeordnet sein muss, in dem sie für einen Benutzer greifbar ist, sondern konstruktiv platzsparend angeordnet sein kann. Die Fernbetätigungseinrichtung kann ein Zug- und/oder Druckmittel aufweisen, insbesondere eine Seilzuganordnung oder ein Übertragungsgestänge.

Die Erfindung betrifft zudem einen Kraftfahrzeugsitz mit wenigstens einer zuvor beschriebenen Armlehnenanordnung.

Weitere Merkmale und Vorteile der Erfindung ergeben sich aus den Ansprüchen sowie der nachfolgenden Beschreibung einer bevorzugten Ausführungsform der Erfindung in Zusammenhang mit den Zeichnungen. Einzelmerkmale der beschriebenen oder gezeigten Ausführungsformen lassen sich dabei in beliebiger Weise miteinander kombinieren, ohne den Rahmen der Erfindung zu überschreiten. In den Zeichnungen zeigen:
- Fig. 1: eine schematische Darstellung eines Kraftfahrzeugsitzes mit einer erfindungsgemäßen Armlehnenanordnung,
- Fig. 2: eine Schnittdarstellung der in Fig. 1 gezeigten Armlehnenanordnung mit einem Armlehnenkörper in einer Nichtgebrauchsposition,
- Fig. 3: eine weitere Schnittdarstellung der in Fig. 2 gezeigten Armlehnenanordnung in einer Zwischenposition des Armlehnenkörpers,
- Fig. 4: eine weitere Schnittdarstellung der in den Fig. 2 und 3 gezeigten Armlehnenanordnung in einer annähernd horizontalen Funktionsposition und
- Fig. 5: eine räumliche Darstellung von Funktionskomponenten einer Neigungsverstelleinrichtung der Armlehnenanordnung.

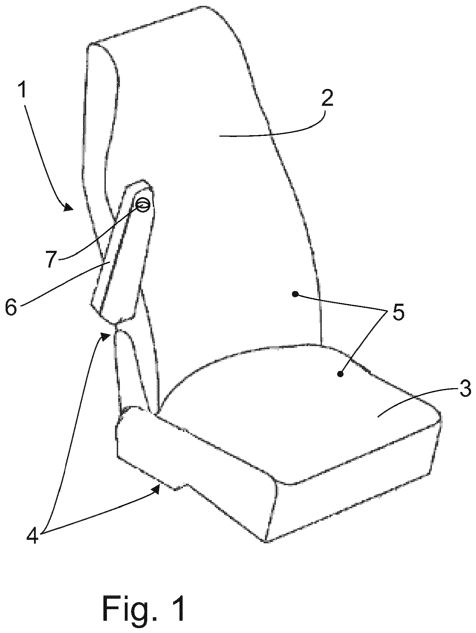

Eine Armlehnenanordnung 1 für einen Kraftfahrzeugsitz gemäß Fig. 1, insbesondere eines Personenkraftwagens, eines Busses, eines Kleinbusses, eines Schiffs oder eines Flugzeugs, weist eine formstabile Trägerstruktur 4 auf. Die Trägerstruktur 4 kann insbesondere eine Metallstruktur sein. Der Kraftfahrzeugsitz umfasst eine Sitzfläche 3, eine Rückenlehne und einen Armlehnenkörper 6. Die Rückenlehne 2 ist schwenkbeweglich mit der Sitzfläche 3 verbunden, so dass ein Neigungswinkel der Rückenlehne 2 relativ zur Sitzfläche 3 verstellbar ist. Hierzu ist die Trägerstruktur 4 mit entsprechend relativ zueinander beweglichen Strukturteilen versehen, die jeweils durch Polsterung und Bezug überdeckt sind, um die Sitzfläche und die Rückenlehne zu bilden.

Die Trägerstruktur 4 der Rückenlehne 2 umfasst eine Schwenkachse S, die in einem Seitenwangenbereich der Rückenlehne 2 - bei Ausrichtung des Kraftfahrzeugsitzes in Fahrzeuglängsrichtung - in einer Fahrzeugquerrichtung verläuft und um welche der Armlehnenkörper 6 schwenkbar ist. Der Armlehnenkörper 6 umfasst ein Gehäuse, das in einem Armauflagebereich eine Polsterung aufweist. Auf einer der Armauflagefläche abgewandten Seite ist ein Betätigungshebel 8 zu einer Neigungsverstellung in einem für einen Benutzer gut greifbaren Bereich angeordnet. Durch die Anordnung des Betätigungshebels an einer dem Fahrzeugboden zugewandten Seite ist es dem Benutzer möglich, einen Arm auf den Armauflagebereich des Armlehnenkörpers 6 abzulegen und mit der Hand des abgelegten Arms in dieser Position den Betätigungshebel 8 an der Unterseite des Armlehnenkörpers 6 zu bedienen.

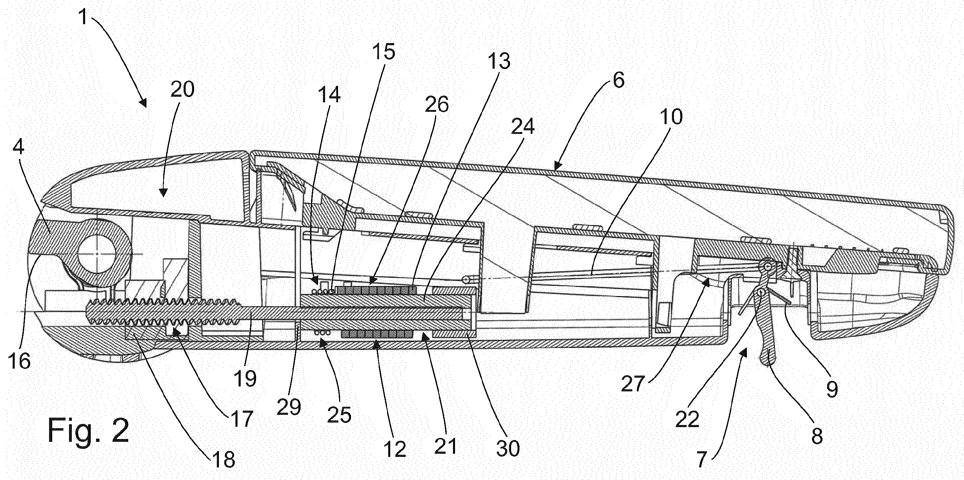

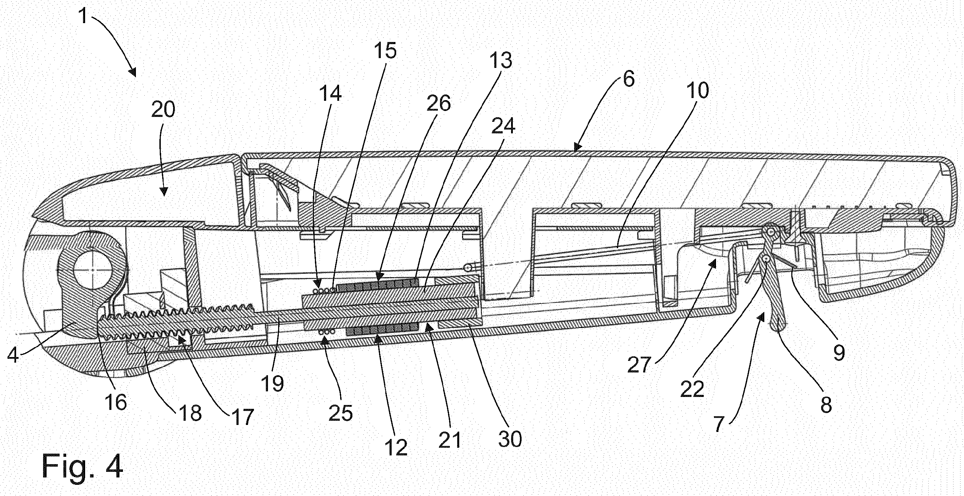

Die Trägerstruktur 4 der Sitzfläche 3 und der Rückenlehne 2 ist von einer Polsterung überzogen, die wiederum mit einem Bezug 5 bezogen ist. Der schwenkbare Armlehnenkörper 6 ist zwischen einer Funktionsposition gemäß Fig. 4, in welcher der Armlehnenkörper 6 annähernd horizontal ausgerichtet ist, und einer Nichtgebrauchsposition gemäß Fig. 2, in welcher der Armlehnenkörper 6 annähernd parallel zur Rückenlehne 2 ausgerichtet ist, verschwenkbar.

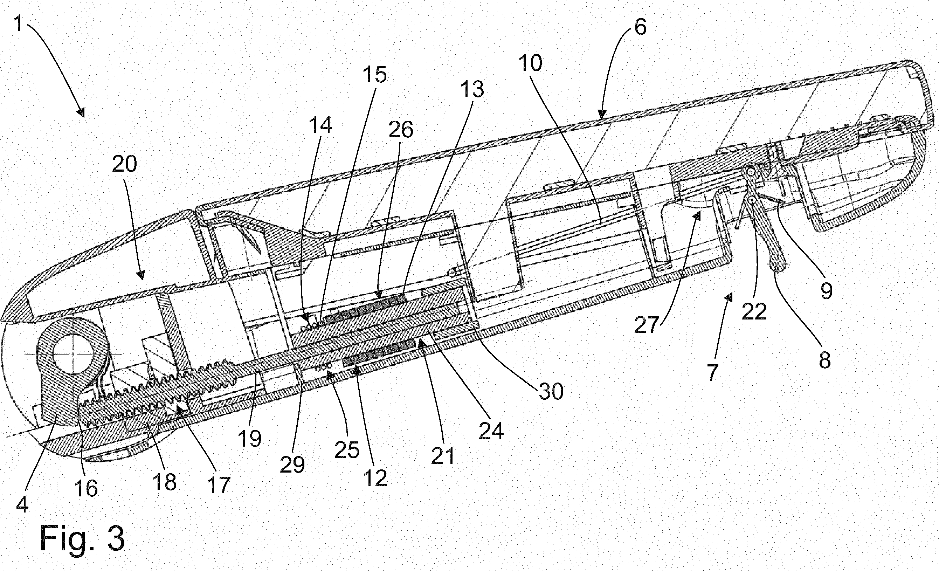

Der Armlehnenkörper 6 ist stufenlos zwischen der Funktions- und der Nichtgebrauchsposition verstellbar, so dass ein Benutzer eine für ihn bequeme Zwischenposition des Armlehnenkörpers 6 einstellen kann. In Fig. 3 ist eine mögliche Zwischenposition des Armlehnenkörpers 6 dargestellt.

Der Kraftfahrzeugsitz kann eine einzelne Armlehnenanordnung 1 umfassen, er kann jedoch auch an einer einem ersten Armlehnenkörper 6 gegenüberliegenden Seite der Rückenlehne eine zweite Armlehnenanordnung umfassen, die spiegelsymmetrisch, im Übrigen jedoch identisch zu der ersten Armlehnenanordnung gestaltet ist.

Die Armlehnenanordnung 1 ist gemäß Fig. 2 mit der Trägerstruktur 4 der Rückenlehne 2 verbunden und weist eine Neigungsverstelleinrichtung 20 auf, die ein Stützglied 21, eine armlehnenkörperfeste Führung 17, eine Blockiereinrichtung 12 und ein Betätigungsglied 7 umfasst. Diese Funktionskomponenten sind in dem Armlehnenkörper 6 integriert. Mit dem Betätigungsglied 7 kann die Blockiereinrichtung 12 blockiert oder freigegeben werden, wodurch das Stützglied 21 für eine Linearverlagerung relativ zu der Führung 17 blockiert oder freigegeben wird. Zwischen der Führung 17 und einer Abstützstelle 16 der Trägerstruktur 4 erstreckt sich somit ein verlagerbarer Längenabschnitt des Stützglieds 21, der die Neigungseinstellung des Armlehnenkörpers 6 definiert. Ist der Längenabschnitt des Stützglieds 21 dabei relativ lang, ist ein Winkel zwischen Sitzfläche 3 und Armlehnenkörper 6 relativ groß eingestellt. Ist der Längenabschnitt des Stützglieds 21 relativ kurz, ist ein relativ kleiner Winkel zwischen Armlehnenkörper 6 und Sitzfläche 3 eingestellt.

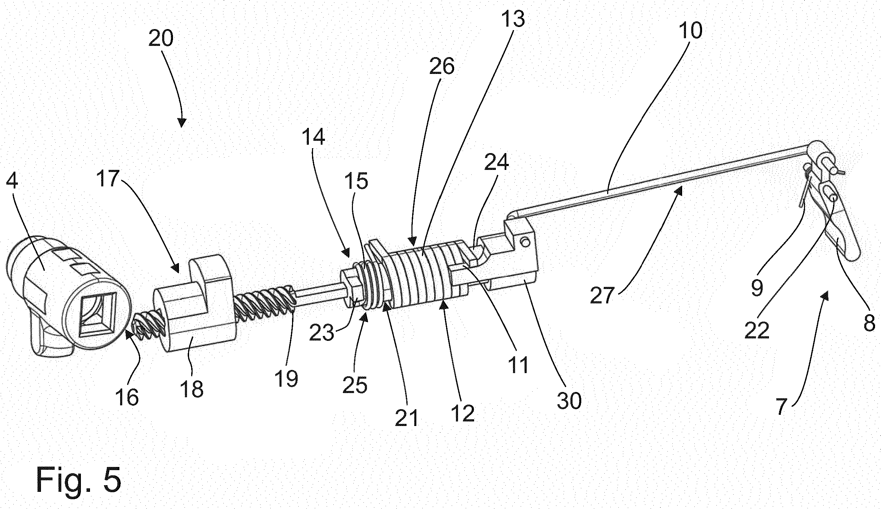

Eine Fernübertragungseinrichtung 27 umfasst das Betätigungsglied 7 mit einem Betätigungshebel 8, der in einer Betrachtungsebene der Fig. 5 in einem unteren Bereich des Armlehnenkörpers 6 angeordnet ist und gegen eine Federkraft einer Schenkelfeder 9 von dem Benutzer verlagert werden kann. Der Betätigungshebel 8 ist an einem quer zu einer Längserstreckungsrichtung des Armlehnenkörpers 6 angeordneten Lagerbolzen 22 gelagert und um diesen schwenkbar.

Bei einer Betätigung des Betätigungshebels 8 durch den Benutzer wird eine an dem Betätigungshebel 8 befestigte Übertragungsstange 10 gegen die Federkraft der Schenkelfeder 9 linear verlagert. Die Übertragungsstange 10 ist in einem dem Betätigungshebel 8 entgegengesetzten Bereich gemäß Fig. 5 mit einem Keilabschnitt 11 verbunden. Der Keilabschnitt 11 ist als Teil einer Schiebehülse 30 ausgeführt, welche einen Bereich des Stützglieds 21 umgibt.

Das Stützglied umfasst einen Zylinder 24 und eine Gewindespindel 19, die einen Gewindeabschnitt und einen gewindelosen Abschnitt umfasst. Der Zylinder 24 ist rotierbar und gegen eine Axialverlagerung mit einer Axialsicherung 29 gesichert, die Teil eines Gehäuses des Armlehnenkörpers 6 ist. Der gewindelose Abschnitt der Gewindespindel 19 ist rotationsunsymmetrisch gestaltet. Der Zylinder 24 ist von einer mit dem gewindelosen Abschnitt der Gewindespindel 19 korrespondierenden Längsbohrung durchsetzt. Der gewindelose Abschnitt der Gewindespindel 19 erstreckt sich in die Längsbohrung des Zylinders 24. Die Gewindespindel 19 ist somit drehfest mit dem Zylinder 24 verbunden und in einer Längsrichtung in dem drehbaren, axial gehäuseseitig fixierten Zylinder 24 verschiebbar. Somit kann eine Rotation der Gewindespindel 19 relativ zu einer mit dem Gehäuse verbundenen Spindelmutter 18 von dem Zylinder 24 kompensiert werden und eine Längsverlagerung der Gewindespindel 19 kann von einer Relativbewegung des gewindelosen Abschnitts der Gewindespindel 19 gegen die Längsbohrung des Zylinders 24 kompensiert werden.

Die Rotation der Gewindespindel 19 ist von einer Schlingbremse 26 blockierbar, die eine Schlingfeder 13 umfasst. Der Keilabschnitt 11 der Schiebehülse 30 weist gemäß Fig. 5 in einem der Übertragungsstange 10 abgewandten Bereich eine Schrägfläche auf. Die Schrägfläche untergreift die letzte Windung einer Schlingfeder 13. Die Schlingfeder 13 umgibt einen Bereich des Zylinders 24 des Stützglieds 21. Aus Übersichtlichkeitsgründen ist in der Fig. 5 eine Abstützung einer Windung des dem Keilabschnitt 11 entgegengesetzten Bereichs der Schlingfeder 13 gegen das Gehäuse des Armauflagekörpers 6 nicht dargestellt. Die Schlingfeder 13 weist einen Innendurchmesser auf, der so gewählt ist, dass er in einem durch den Keilabschnitt 11 unbetätigten Zustand den Zylinder 24 des Stützglieds 21 festklemmt, sodass dieser weder rotierbar noch linear beweglich ist. Die Schlingfeder 13 ist aus einem Draht mit rechteckigem Querschnitt hergestellt, um eine große Klemmfläche zu gewährleisten.

Ebenso an dem in Fig. 5 nicht dargestellten Gehäuse abgestützt ist ein Windungsende einer Torsionsfeder 15. Die Torsionsfeder 15 fungiert hier als ein Antrieb 14 und umgibt einen der Schwenkachse S zugewandten Bereich des Zylinders 24 des Stützglieds 21. Die Torsionsfeder 15 und die Schlingfeder 13 sind in entgegengesetzte Richtungen gewickelt. Eine der Schwenkachse S abgewandte letzte Windung der Torsionsfeder 15 ist an dem Gehäuse des Armauflagekörpers 6 abgestützt. Eine der Schwenkachse S zugewandte letzte Windung der Torsionsfeder 15 ist an einem radialen Vorsprung 23 des Zylinders 24 befestigt, sodass die Torsionsfeder 15 von der Rotation des Zylinders 24 vorgespannt werden kann. Der Zylinder 24 erstreckt sich in die Torsionsfeder 15, die Schlingfeder 13 und in die Schiebehülse 30.

Der Zylinder 24 ist gegen die Torsionsfeder 15, die Schlingfeder 13 und die Schiebehülse 30 drehbar. Die mit dem Gehäuse des Armlehnenkörpers feststehende Führung 17 bildet ein auch als Spindelmutter 18 bezeichnetes Innengewinde, das auf ein Außengewinde der Gewindespindel 19 abgestimmt ist. In der Spindelmutter 18 ist der Gewindeabschnitt der Gewindespindel 19 drehbar. Beide Gewinde sind bezüglich ihrer Steigung nicht selbsthemmend ausgeführt, sodass eine Krafteinleitung durch den von dem Benutzer auf dem Armlehnenkörper 6 abgelegten Arm die Rotation der Gewindespindel 19 bewirkt. Innen- und Außengewinde bilden demzufolge ein Bewegungsgewinde. Ist das Stützglied 21 von der Blockiereinrichtung 12 festlegt, sind Gewindeflanken der Gewindespindel 19 und der Spindelmutter 18 aufeinander abgestützt, es findet somit ein Formschluss in Verstellrichtung des Stützgliedes über die Gewindeflanken statt.

Um die Neigung des Armlehnenkörpers 6 gegenüber der Sitzfläche 3 zu verstellen, ergreift der Benutzer den Betätigungshebel 8 und zieht ihn in eine in einer Betrachtungsebene der Fig. 4 rechte Richtung. Dabei wird die Schenkelfeder 9 vorgespannt, die einerseits an dem Gehäuse und andererseits an dem Betätigungshebel 8 abgestützt ist. Der Betätigungshebel 8 dreht sich um den Lagerbolzen 22, wobei die Übertragungsstange 10 nach links verlagert wird. Die Übertragungsstange 10 verlagert die Schiebehülse 30 mit dem Keilabschnitt 11 ebenso nach links. Dabei wird die an die Schiebehülse 30 angrenzende Windung der Schlingfeder 13 entlang der Schrägfläche des Keilabschnitts 11 nach oben gebogen, wodurch auch die übrigen Windungen geweitet werden. Durch eine Vergrößerung des Querschnitts der Schlingfeder 13 wird nun die Blockiereinrichtung 12 freigegeben und der Zylinder 24 innerhalb der Schlingfeder 13 ist nun drehbar.

Drückt der Benutzer den Armlehnenkörper 6 nun nach unten, so wird die Gewindespindel 19 gegen die Abstützstelle 16 der Trägerstruktur 4 gedrückt. Die Gewindespindel 19 gerät gegenüber der Spindelmutter 18 in Rotation. Dabei verkleinert sich der Längsabschnitt der Gewindespindel 19 zwischen der Führung 17 und der Abstützstelle 16 der Trägerstruktur 4. Die Rotation und die Längsverlagerung der Gewindespindel 19 wird durch eine Rotation des Zylinders 24 und eine Längsverlagerung des abgeflachten Abschnitts der Gewindespindel 19 in dem Zylinder 24 kompensiert. Eine Neigungsverstellung des Armlehnenkörpers 6 ist nur so lange möglich, solange der Benutzer den Betätigungshebel 8 betätigt.

Lässt der Benutzer den Betätigungshebel 8 los, wird der Betätigungshebel 8 von der Schenkelfeder 9 zurückgestellt. Die Übertragungsstange 10 wird nach rechts verlagert, der Keilabschnitt 11 ebenso. Wenn die Schrägfläche des Keilabschnitts 11 nicht mehr auf die Windung der Schlingfeder 13 wirkt, ziehen sich die Windungen der Schlingfeder 13 durch ihre Vorspannung zusammen und der Zylinder 24 wird in der Schlingfeder 13 geklemmt. Somit ist eine Rotation der Gewindespindel 19 nicht mehr möglich und der Armlehnenkörper 6 ist festgelegt.

Um den Neigungswinkel zwischen der Sitzfläche 3 und dem Armlehnenkörper 6 zu vergrößern, zieht die Bedienperson den Bedienhebel 8 nach rechts, wobei der Keilabschnitt 11 wie oben beschrieben die Schlingfeder 13 freigibt. Die vorgespannte Torsionsfeder 15 entspannt sich, wenn kein Druck von oben auf den Armlehnenkörper 6 einwirkt, wobei der Armlehnenkörper 6 nach oben verschwenkt wird.

## Patentansprüche

1. Armlehnenanordnung (1) für einen Kraftfahrzeugsitz mit einer ortsfesten Trägerstruktur (4) und mit einem Armlehnenkörper (6), der relativ zu der Trägerstruktur (4) um eine Schwenkachse (S) schwenkbeweglich gelagert ist, und dem eine Neigungsverstelleinrichtung (20) zugeordnet ist, die in einer Funktionsposition des Armlehnenkörpers (6) eine Veränderung einer Neigung des Armlehnenkörpers (6) relativ zur ortsfesten Trägerstruktur (4) ermöglicht, wobei die Neigungsverstelleinrichtung (20) ein manuell bedienbares Betätigungsglied (7) und eine Blockiereinrichtung (12) zur Sicherung einer mittels des Betätigungsgliedes (7) vorgenommenen Neigungseinstellung aufweist, wobei der Armlehnenkörper (6) ein Stützglied (21) aufweist, das quer zu der Schwenkachse (S) an dem Armlehnenkörper (6) linearbeweglich verstellbar und stirnseitig an der ortsfesten Trägerstruktur (4) abgestützt ist, und dass das Betätigungsglied (7) und die Blockiereinrichtung (12) derart mit dem linearbeweglichen Stützglied (21) in Wirkverbindung sind, dass das Stützglied (21) durch das Betätigungsglied (7) für eine Linearverstellung freigebbar und durch die Blockiereinrichtung (12) in einer eingestellten Stützposition arretierbar ist, **dadurch gekennzeichnet, dass** das Stützglied (21) durch eine mit dem Armlehnenkörper (6) feste Führung (17) in Verstellrichtung formschlüssig gehalten ist, und dass das Stützglied (21) mittels eines Bewegungsgewindes in der mit dem Armlehnenkörper (6) festen Führung (17) gehalten ist.

2. Armlehnenanordnung (1) nach Anspruch 1, **dadurch gekennzeichnet, dass** das Betätigungsglied (7) mittels einer Fernübertragungseinrichtung (27) mit der Blockiereinrichtung (12) gekoppelt ist.

3. Kraftfahrzeugsitz mit wenigstens einer Armlehnenanordnung (1) nach einem der vorhergehenden Ansprüche.

## Claims

1. Arm rest arrangement (1) for an automotive vehicle seat with a fixed carrier structure (4) and an arm rest body (6) mounted in such a way that it can be pivoted about a pivoting axis (S) in relation to the carrier structure (4), and with which an incline adjustment device (20) is associated, allowing a modification of an incline of the arm rest body (6) in relation to the fixed carrier structure (4) in a functional position of the arm rest body (6), wherein the incline adjustment device (20) comprises a manually operable actuating member (7) and a blocking device (12) for securing an incline adjustment carried out by means of the actuating member (7), wherein the arm rest body (6) comprises a supporting member (21) that can be adjusted in a linearly movable manner transversely to the pivoting axis (S) on the arm rest body (6) and is supported on the front end side on the fixed carrier structure (4), and the actuating member (7) and the blocking device (12) are operatively connected to the linearly movable supporting member (21) such that the supporting member (21) can be released by the actuating member (7) for a linear adjustment and can be locked by the blocking device (12) in an adjusted supporting position,
**characterized in that**
the supporting member (21) is retained in a form-fitting manner in the adjustment direction by a guiding device (17) solidly fixed to the arm rest body (6), and **in that** the supporting member (21) is retained in the guiding device (17) solidly fixed to the arm rest body (6) by means of a transmission thread.

2. Arm rest arrangement (1) according to claim 1, **characterized in that** the actuating member (7) is coupled to the blocking device (12) by means of a remote transmission device (27).

3. Automotive vehicle seat including at least one arm rest arrangement (1) according to any of the preceding claims.

## Revendications

1. Système d'accoudoir (1) pour un siège de véhicule automobile avec une structure de support (4) fixe en position et avec un corps d'accoudoir (6) monté à pouvoir pivoter autour d'un axe de pivotement (S) par rapport à la structure de support (4) et associé au corps d'accoudoir est un dispositif de réglage d'inclinaison (20) permettant, dans une position de fonctionnement du corps d'accoudoir (6), une modification d'une inclinaison du corps d'accoudoir (6) par rapport à la structure de support (4) fixe en position, le dispositif de réglage d'inclinaison (20) comprenant un élément d'actionnement (7) opérable manuellement et un dispositif de blocage (12) pour fixer un ajustage d'inclinaison effectué par le biais de l'élément d'actionnement (7), le corps d'accoudoir (6) présentant un élément de support (21) qui peut être ajusté transversalement par rapport à l'axe de pivotement (S) sur le corps d'accoudoir (6) à course linéaire et est supporté sur l'extrémité avant à la structure de support (4) fixe en position, et l'élément d'actionnement (7) et le dispositif de blocage (12) étant connectés fonctionnellement à l'élément de support (21) déplaçable linéairement de telle manière que l'élément de support (21) peut être déclenché pour un ajustement linéaire par l'élément d'actionnement (7) et peut être arrêté dans une position de support adaptée par le dispositif de blocage (12),
**caractérisé en ce que** l'élément de support (21) est retenu dans la direction d'ajustement par complémentarité de formes au moyen d'un guidage (17) solidement fixé au corps d'accoudoir (6), et **en ce que** l'élément de support (21) est retenu au moyen d'un filetage de transmission dans le guidage (17) solidement fixé au corps d'accoudoir (6).

2. Système d'accoudoir (1) selon la revendication 1, **caractérisé en ce que** l'élément d'actionnement (7) est couplé au dispositif de blocage (12) par le biais d'un dispositif de transmission à distance (27).

3. Siège de véhicule automobile avec au moins un système d'accoudoir (1) selon l'une quelconque des revendications précédentes.
